# EUROPÄISCHE PATENTSCHRIFT

(11) **EP 1 894 828 B1**
(45) Veröffentlichungstag und Bekanntmachung des Hinweises auf die Patenterteilung: **06.01.2010**
(21) Anmeldenummer: 07114146.9
(22) Anmeldetag: 10.08.2007
(51) Int. Cl.: B62K 19/38

(54) **Asymmetrischer Fahrradhinterbau**
Asymmetrical bicycle rear section
Arrière de vélo asymétrique

(30) Priorität: 30.08.2006 DE 202006013287 U
(43) Veröffentlichungstag der Anmeldung: 05.03.2008
(73) Patentinhaber: Canyon Bicycles GmbH, 56073 Koblenz (DE)
(72) Erfinder: Scheffer, Lutz, 82467 Garmisch-Partenkirchen (DE)
(74) Vertreter: von Kirschbaum, Alexander

(56) Entgegenhaltungen:
- WO-A-00/76836

## Beschreibung

Die Erfindung betrifft einen Hinterbau für ein Fahrrad zur Verwendung mit einer einseitigen Scheibenbremse an der Hinterachse.

Im Fahrradbau werden aufgrund ihrer verbesserten Bremsleistung sowohl an der Vorder- als auch an der Hinterachse Scheibenbremsen montiert. Eine Hinterradscheibenbremse ist in der Regel am Hinterbau des Fahrradrahmens befestigt. Generell wird eine einseitige Scheibenbremse verbaut, so dass eine Bremsscheibe an einer Seite des Hinterbaus des Fahrradrahmens befestigt ist,

Die durch eine Scheibenbremse auf den Hinterbau eines Fahrradrahmens wirkenden Kräfte und Momente sind dadurch besonders hoch, dass sich die Bremsscheibe und der Bremssattel relativ nah an der Hinterachse befinden, so dass die dort entstehenden Kräfte und Momente durch den sehr kurzen Hebel erheblich größer sind als beispielsweise Kräfte und Momente, die durch eine Felgenbremse entstehen, die entlang einer Felge in einem größeren Abstand zur Hinterachse angeordnet ist.

Um die an der Hinterachse auftretenden Bremskräfte besser aufnehmen zu können, ist in WO 00/76836gattungsbildender ein Fahrradrahmen und Hinterbau beschrieben, dessen Sitzstreben einen Abstand von mindestens zwei Zoll zum Laufrad aufweisen, wobei dieser Abstand von den Innenflächen der Sitzstreben aus zu der breitesten Stelle des Laufrades gemessen wird. Nachteilig an einer derartigen Anordnung ist, dass es sich um eine komplexe geometrische Ausgestaltung des Hinterbaus handelt, die einen erhöhten Konstruktionsaufwand voraussetzt. Weiterhin müssen die beschriebenen Parameter bezüglich des Elastizitätsmoduls und des Trägheitsmoments der Sitzstreben genau eingehalten werden, was einen erhöhten Aufwand bei der Materialauswahl und Verarbeitung voraussetzt.

Aufgabe der Erfindung ist es, einen verstärkten Hinterbau zur Aufnahme einer einseitigen Scheibenbremse an der Hinterachse zu schaffen, der einen vereinfachten Aufbau aufweist.

Die Aufgabe wird erfindungsgemäß gelöst durch die Merkmale des Anspruchs 1.

Erfindungsgemäß weist ein Fahrradhinterbau mindestens eine Kettenstrebe sowie zwei Sitzstreben auf. Eine Sitzstrebe weist eine Befestigungsvorrichtung zur Aufnahme eines Bremssattels einer Scheibenbremse auf. Diese Sitzstrebe, an der die Scheibenbremse befestigt ist, weist zumindest teilweise einen größeren Außendurchmesser auf als die zweite Sitzstrebe.

Durch den größeren Außendurchmesser der Sitzstrebe werden ihre Steifigkeit und Festigkeit erhöht. Da gegenüber den bekannten Trommel- und Felgenbremsen Scheibenbremsen exzentrisch zur Rahmenmittelebene angeordnet sind, wirken bei einem Bremsvorgang erhöhte einseitige Beanspruchungen in Form von Kräften und Momenten, die über die Bremsbefestigung eingeleitet und vom Hinterbau abgetragen werden müssen. Durch den erhöhten Außendurchmesser kann die verstärkte Sitzstrebe die einseitigen Kräfte und Momente beim Betätigen der Scheibenbremse besser abtragen. Insbesondere ist der Hinterbau an genau der Stelle verstärkt, an der die größten Kräfte und Momente an der Sitzstrebe beim Bremsen auftreten. Diese Stelle befindet sich in Richtung des Sattelrohrs unmittelbar über der Befestigungsvorrichtung des Bremssattels.

Bei den auftretenden Kräften und Momenten handelt es sich in erster Linie um Biegemomente, die an der oben genannten Stelle angreifen und im Wesentlichen in Richtung des Tretlagers gerichtet sind. Dies liegt darin begründet, dass der Bremssattel der Scheibenbremse an der vom Tretlager weg weisenden Seite der Sitzstrebe angebracht ist und bei einem Betätigen der Scheibenbremse ein Biegemoment auf die Sitzstrebe in Richtung des Tretlagers aufbringt.

Eine Sitzstrebe mit einem vergrößerten Außendurchmesser weist insbesondere gegenüber Biegemomenten eine erhöhte Steifigkeit auf. Wird eine Strebe lediglich auf Zug und Druck belastet, ist es sinnvoll, ihre Wandstärke zu vergrößern, während zum besseren Aufnehmen von Biegemomenten ein vergrößerter Außendurchmesser die effektivere Maßnahme darstellt. Insbesondere ist es möglich, bei einer geringen oder gar keinen Erhöhung des Gewichts der Sitzstrebe eine erhöhte Steifigkeit gegenüber Biegemomenten zu gewährleisten. Insbesondere kann dies dadurch realisiert werden, dass die Wandstärke der verstärkten Sitzstrebe im Vergleich zur zweiten Sitzstrebe unverändert bleibt oder sogar verringert wird.

Da an der zweiten Seite des Hinterbaus keine Scheibenbremse angebracht ist, muss diese Seite auch nicht verstärkt ausgebildet werden. Die durch einen Bremsvorgang hervorgerufenen Kräfte und Momente treten im Wesentlichen nur auf der Seite des Hinterbaus auf, an der die Scheibenbremse montiert ist. Durch die verstärkte Ausführung von nur einer Sitzstrebe ist es gegenüber dem bisherigen Stand der Technik möglich, einen stabileren Hinterbau zur Aufnahme einer Scheibenbremse zu konstruieren und gleichzeitig Material und Gewicht einzusparen.

Weiterhin ist es möglich, durch die asymmetrische Ausgestaltung des Hinterbaus designerische Akzente zu setzen, insbesondere da eine asymmetrische Form als Rahmengeometrie direkt ins Auge sticht.

In einer bevorzugten Ausführungsform der Erfindung ist der Außendurchmesser in einem zur Hinterachsaufnahme weisenden Abschnitt der Sitzstrebe größer als in einem zur Sattelstrebe weisenden Abschnitt der Sitzstrebe. Der Außendurchmesser der Sitzstrebe kann dabei von der Hinterachsaufnahme zur Sattelstrebe kontinuierlich abnehmen.

Besonders bevorzugt ist es, den Bremssattel der Scheibenbremse an der vom Tretlager weg weisenden Seite des Sitzrohres zu befestigen.

Weiterhin ist es möglich, den Außendurchmesser des Sitzrohres lediglich im Bereich der Befestigungsvorrichtung zu vergrößern und den restlichen Außendurchmesser des Sitzrohres, beispielsweise in dem in Richtung der Sattelstütze weisenden Abschnitt, unverändert zu lassen.

Eine Vergrößerung des Außendurchmessers des Sitzrohres ist werkstoffunabhängig und kann sowohl für Rahmen aus metallischen Werkstoffen, wie beispielsweise Aluminium, Titan oder Stahl, wie auch für Rahmen aus nichtmetallischen Werkstoffen, wie beispielsweise Kunststoffen, Faserkunststoffverbunden, Keramiken, Kohlefasern usw., durchgeführt werden.

Der größere Außendurchmesser der ersten Sitzstrebe gegenüber der zweiten Sitzstrebe kann sich über die gesamte Länge der ersten Sitzstrebe erstrecken. Jedoch ist es auch möglich, dass lediglich ein Teil der ersten Sitzstrebe, beispielsweise ein Drittel oder zwei Drittel, einen größeren Außendurchmesser gegenüber der zweiten Sitzstrebe aufweist.

Die beschriebene asymmetrische Ausgestaltung des Hinterbaus kann sowohl in Verbindung mit einer ungefederten als auch mit einer gefederten Hinterachse realisiert werden. Bei einer gefederten Hinterachse ist der Hinterbau entsprechend als Hinterbauschwinge ausgebildet und kann ebenfalls die erfindungsgemäßen Merkmale aufweisen. Weiterhin kann der Hinterbau einarmig, insbesondere als einarmige Schwinge ausgebildet sein, indem lediglich eine Kettenstrebe auf einer Seite des Hinterrades vorgesehen ist. Diese einarmige Schwinge kann ebenfalls gefedert sein.

Bei der verwendeten Rahmengeometrie kann es sich um einen Diamantrahmen handeln. Jedoch sind auch weitere Rahmengeometrien möglich.

Weiterhin kann die Befestigung der Scheibenbremse ebenso, anstatt an der Sitzstrebe, an einer Kettenstrebe erfolgen. Anstatt der Sitzstrebe müsste dann die Kettenstrebe einen größeren Außendurchmesser aufweisen, so dass diese Maßnahme ebenfalls zu einer Erhöhung der Leichtbaugüte führt.

Erfindungsgemäß ist es somit besonders bevorzugt, dass die bremsseitige Sitzstrebe, d. h. die erste Sitzstrebe, höher ist als die zweite bzw. kettenblattseitige Sitzstrebe. Vorzugsweise ist die erste Sitzstrebe in dem Bereich in dem die Bremskraft in die Sitzstrebe eingeleitet wird um einen Faktor von 1,2 bis 1,4, insbesondere ca. 1,3 höher. Die Höhe ist hierbei die Abmessung der Sitzstrebe in vertikaler Richtung in montiertem Zustand der Sitzstrebe.

Besonders bevorzugt ist es, dass die erste Sitzstrebe ihre maximale Höhe im Bereich der Bremskrafteinleitung, d. h. im Bereich der Befestigung des Bremssattels, sowie in hieran angrenzenden Bereichen aufweist. Vorzugsweise verjüngt sich die Sitzstrebe sodann in Richtung des Sitzrohres. Diese Verjüngung erfolgt vorzugsweise kontinuierlich. Hierdurch kann bei guter Aufnahme der Bremskräfte das Gewicht gering gehalten werden.

Ferner ist es bevorzugt, dass der bremsseitige Knotenpunkt zwischen der ersten Sitzstrebe und der Kettenstrebe, bzw. der Bereich des bremsseitigen Ausfallendes biegesteif ausgeführt ist. Insbesondere ist dieser Bereich mindestens doppelt so biegesteif, wie das Ausfallende auf der Kettenseite. Vorzugsweise weist die bremsseitige Sitzstrebe im Anschluss an das Ausfallende eine größere Höhe auf als die Kettenstrebe im Anschluss an da Ausfallende.

Bei dem erfindungsgemäßen Fahrradhinterbau beträgt, bezogen auf die erste Sitzstrebe, das minimale Produkt aus Trägheitsmoment und Scheibenelastizitätsmodul in Sitzstrebenrichtung 350 Nm².

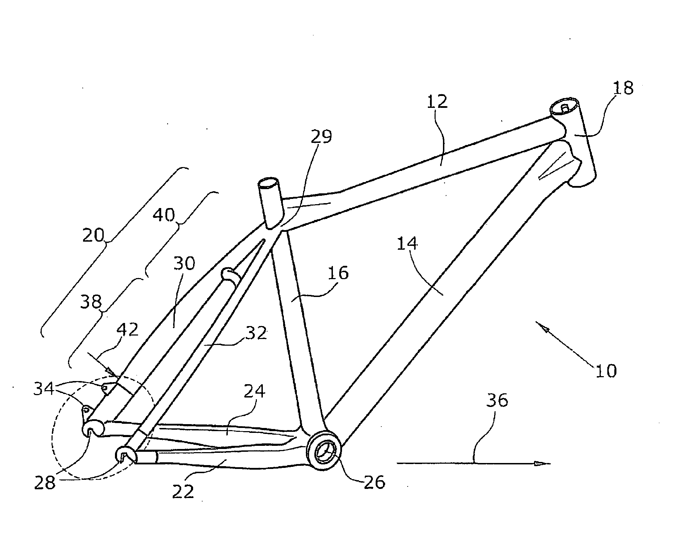

Im Folgenden wird eine bevorzugte Ausführungsform der Erfindung anhand der Figur erläutert.

Die Figur zeigt eine Schrägansicht eines Fahrradrahmens mit dem erfindungsgemäßen Hinterbau.

Ein Fahrradrahmen 10, der beispielsweise als Diamantrahmen ausgebildet ist, weist ein Oberrohr 12, ein Unterrohr 14, ein Sitzrohr 16 sowie ein Steuerrohr 18 auf. Ferner weist der Rahmen einen Hinterbau 20 auf. Der Hinterbau 20 weist zwei im Wesentlichen parallel zur Fahrbahn verlaufende Kettenstreben 22,24 sowie zwei Sitzstreben 30,32 auf. Die Sitzstreben 30,32 erstrecken sich dabei von einer Hinterachsaufnahme 28 in Richtung des Punktes 29, an dem das Oberrohr 12 und das Sitzrohr 16 zusammenlaufen. Die Hinterachsaufnahme 28 dient zur Aufnahme der Achse eines nicht dargestellten Hinterrades.

Die Kettenstreben 22,24 verlaufen von der Hinterachsaufnahme 28 im Wesentlichen parallel zur Fahrbahn in Richtung einer Tretlageraufnahme 26, die am Treffpunkt des Unterrohrs 14 und des Sitzrohrs 16 angeordnet ist.

Die in Fahrtrichtung 36 linke Sitzstrebe 30 weist zur Aufnahme des Bremssattels einer nicht dargestellten Scheibenbremse eine Befestigungsvorrichtung 34 auf. Dafür können beispielsweise an der Sitzstrebe 30 zwei dreieckförmige Ansätze ausgebildet sein, an die der Bremssattel durch Schrauben befestigt wird.

Wesentliches Merkmal der Erfindung ist, dass die Sitzstrebe 30, an der die Scheibenbremse montiert ist, einen größeren Außendurchmesser aufweist als die Sitzstrebe 32, an der keine Scheibenbremse montiert ist.

Weiterhin weist die Sitzstrebe 30 in einem zur Hinterachsaufnahme 28 weisenden Abschnitt 38 einen größeren Durchmesser auf als in einem zum Sitzrohr 16 weisenden Abschnitt 40. Dabei nimmt der Außendurchmesser der Sitzstrebe 30 von der Hinterachsaufnahme 28 zum Sitzrohr 16 kontinuierlich ab. Der Außendurchmesser der rechten Sitzstrebe 32 ist von der Hinterachsaufnahme 28 in Richtung des Sitzrohrs 16 konstant.

Die Befestigungsvorrichtung 34 ist an der vom Tretlager 26 weg weisenden Seite der ersten Sitzstrebe 30 angeordnet.

Die erste Sitzstrebe 30 weist in dem Bereich einen vergrößerten Außendurchmesser auf, der sich direkt über der Befestigungsvorrichtung 34 in Richtung des Sitzrohrs 16 befindet. Die durch die Bremswirkung der Scheibenbremse an dieser Stelle am stärksten auftretenden Biegemomente 42 können damit verbessert abgeleitet werden. In dem oberen zum Sitzrohr 16 weisenden Abschnitt 40 der ersten Sitzstrebe 30 treten dagegen lediglich geringere Biegemomente auf, so dass es in diesem Bereich nicht notwendig ist, den Außendurchmesser der ersten Sitzstrebe 30 zu vergrößern. Da an der zweiten Sitzstrebe 32 ebenfalls keine größeren Biegemomente durch den Einsatz der Scheibenbremse entstehen, ist es ebenfalls nicht notwendig, die zweite Sitzstrebe 32 mit einem größeren Außendurchmesser zu versehen. Insgesamt entsteht somit ein asymmetrischer Hinterbau 20.

## Patentansprüche

1. Fahrradhinterbau (20) mit
mindestens einer Kettenstrebe (22,24), und zwei Sitzstreben (30,32),
wobei eine erste Sitzstrebe (30) eine Befestigungsvorrichtung (34) zur Aufnahme eines Bremssattels einer Scheibenbremse aufweist,
**dadurch gekennzeichnet, dass**
die erste Sitzstrebe (30) zum besseren Aufnehmen der einseitigen Bremsmomente und -kräfte zumindest teilweise einen größeren Außendurchmesser aufweist als die zweite Sitzstrebe (32).

2. Fahrradhinterbau (20) nach Anspruch 1, **dadurch gekennzeichnet, dass** der Außendurchmesser in einem zu einer Hinterachsaufnahme (28) weisenden Abschnitt (38) der ersten Sitzstrebe (30) größer ist als in einem zum Sitzrohr (16) weisenden Abschnitt (40) der Sitzstrebe (30).

3. Fahrradhinterbau (20) nach Anspruch 2, **dadurch gekennzeichnet, dass** der Außendurchmesser der ersten Sitzstrebe (30) von der Hinterachsaufnahme (28) zum Sitzrohr (16) kontinuierlich abnimmt.

4. Fahrradhinterbau (20) nach Anspruch 2, **dadurch gekennzeichnet, dass** der Außendurchmesser der ersten Sitzstrebe (30) von der Hinterachsaufnahme (28) zum Sitzrohr (16) stufenweise abnimmt.

5. Fahrradhinterbau (20) nach einem der Ansprüche 1 bis 4, **dadurch gekennzeichnet, dass** die Befestigungsvorrichtung (34) an der vom Tretlager (26) weg weisenden Seite der ersten Sitzstrebe (30) angeordnet ist.

6. Fahrradhinterbau (20) nach einem der Ansprüche 1 bis 5, **dadurch gekennzeichnet, dass** der Außendurchmesser der ersten Sitzstrebe (30) im Bereich der Befestigungsvorrichtung (34) vergrößert ist.

7. Fahrradhinterbau (20) nach einem der Ansprüche 1 bis 6, **dadurch gekennzeichnet, dass** die erste Sitzstrebe (30) insbesondere die erste und zweite Sitzstrebe (30,32) ausschließlich Carbon aufweisen.

8. Fahrradrahmen (10) mit
einem Oberrohr (12), einem Unterrohr (14), einem Sattelrohr (16), einem Steuerrohr (18) und einem Fahrradhinterbau (20) nach einem der Ansprüche 1 bis 7.

9. Fahrradrahmen (10) nach Anspruch 8, **dadurch gekennzeichnet, dass** der Fahrradrahmen (10) als Diamantrahmen ausgebildet ist.

## Claims

1. Bicycle rear section (20) comprising
at least one chain stay (22, 24) and two seat stays (30, 32),
wherein a first seat stay (30) comprises a fastening device (34) for receiving a caliper of a disc brake,
**characterized in that**
for a better absorption of the one-sided braking moments and forces, the outer diameter of the first seat stay (30) is larger, at least in part, than that of the second seat stay (32).

2. Bicycle rear section (20) of claim 1, **characterized in that** the outer diameter of a section (38) of the first seat stay (30) directed towards a rear axle mount (28) is larger than that of a section (40) of the seat stay (30) directed towards the seat tube (16).

3. Bicycle rear section (20) of claim 2, **characterized in that** the outer diameter of the first seat stay (30) decreases continuously from the rear axle mount (28) to the seat tube (16).

4. Bicycle rear section (20) of claim 2, **characterized in that** the outer diameter of the first seat stay (30) decreases in a stepped manner from the rear axle mount (28) to the seat tube (16).

5. Bicycle rear section (20) of one of claims 1 to 4, **characterized in that** the fastening device (34) is arranged on the side of the first seat stay (30) averted from the bottom bracket (26).

6. Bicycle rear section (20) of one of claims 1 to 5, **characterized in that** the outer diameter of the first seat stay (30) is enlarged in the region of the fastening device (34).

7. Bicycle rear section (20) of one of claims 1 to 6, **characterized in that** the first seat stay (30), especially the first and second seat stays (30, 32), exclusively comprise carbon.

8. Bicycle frame (10) comprising
a top tube (12), a down tube (14), a seat tube (16), a head tube (18) and a bicycle rear section (20) as defined in one of claims 1 to 7.

9. Bicycle frame (10) of claim 8, **characterized in that** the bicycle frame (10) is designed as a diamond frame.

## Revendications

1. Arrière de bicyclette (20) comprenant
au moins une base arrière (22, 24) et deux haubans (30, 32),
un premier hauban (30) comprenant un dispositif de fixation (34) pour recevoir un étrier de frein d'une frein à disque,
**caractérisé en ce que**
le diamètre externe du premier hauban (30) est au moins partiellement supérieur à celui du deuxième hauban (32) afin de mieux absorber les moments et forces de freinage agissant sur un côté.

2. Arrière d'une bicyclette (20) selon la revendication 1, **caractérisé en ce que** le diamètre externe dans une section (38) du premier hauban (30), tournée vers le logement de l'axe arrière (28), est supérieur à celui dans une section (40) dudit hauban (30) tournée vers le tube de selle (16).

3. Arrière d'une bicyclette (20) selon la revendication 2, **caractérisé en ce que** le diamètre externe du premier hauban (30) décroît en continu du logement de l'axe arrière (28) jusqu'au tube de selle (16).

4. Arrière d'une bicyclette (20) selon la revendication 2, **caractérisé en ce que** le diamètre externe du premier hauban (30) décroît graduellement du logement de l'axe arrière (28) jusqu'au tube de selle (16).

5. Arrière d'une bicyclette (20) selon l'une quelconque des revendications 1 à 4, **caractérisé en ce que** le moyen de fixation (34) est disposé sur le côté du premier hauban (30) détourné du pédalier (26).

6. Arrière d'une bicyclette (20) selon l'une quelconque des revendications 1 à 5, **caractérisé en ce que** le diamètre externe du premier hauban (30) est élargi dans la région du moyen de fixation (34).

7. Arrière d'une bicyclette (20) selon l'une quelconque des revendications 1 à 6, **caractérisé en ce que** le premier hauban (30), notamment le premier et le deuxième hauban (30, 32), exclusivement comprend de carbone.

8. Cadre de bicyclette (10) comprenant
un tube horizontal (12), un tube diagonal (14), un tube de selle (16), un tube de direction (18) et un arrière de bicyclette (20) selon l'une quelconque des revendications 1 à 7.

9. Cadre de bicyclette (10) selon la revendication 8, **caractérisé en ce que** le cadre de bicyclette (10) est configuré comme un cadre en diamant.
